# EUROPÄISCHE PATENTSCHRIFT

(11) **EP 1 964 984 B1**
(45) Veröffentlichungstag und Bekanntmachung des Hinweises auf die Patenterteilung: **06.05.2009**
(21) Anmeldenummer: 07003949.0
(22) Anmeldetag: 27.02.2007
(51) Int. Cl.: E03C 1/04

(54) **Sanitärarmatur mit leuchtendem Betätigungshebel**
Tap with luminescent handle
Armature sanitaire dotée d'un levier d'actionnement lumineux

(43) Veröffentlichungstag der Anmeldung: 03.09.2008
(73) Patentinhaber: KWC AG, 5726 Unterkulm (CH); Schott AG, 55120 Mainz 1 (DE)
(72) Erfinder: Keiper, Oliver, 65326 Aarbergen (DE); Lehner, Michael, 5722 Gränichen (CH); Leutwyler, André, 5737 Menziken (CH); Lammel, Michael, 52066 Aachen (DE)
(74) Vertreter: Schaad, Balass, Menzl & Partner AG

(56) Entgegenhaltungen:
- WO-A-85/05167
- WO-A-20/06094684
- JP-A- 2001 120 448
- JP-A- 2001 123 485
- US-A- 6 126 290

## Beschreibung

Die vorliegende Erfindung betrifft eine Sanitärarmatur gemäss dem Oberbegriff des Patentanspruchs 1.

Eine Sanitärarmatur ist beispielsweise aus der Druckschrift DE 100 42 722 A1 bekannt. Sie weist ein Verstellelement in Gestalt eines Hebels auf. Dieser besitzt eine zentrisch angeordnete in Richtung gegen oben offene Aufnahme auf, in welcher eine Batterie sich befindet. Die Aufnahme ist mit einer Abdeckung versehen, in der Leuchtdioden und Signaldioden angeordnet sind. Die Leuchtdioden geben Licht ab und strahlen dabei den Benutzer der Sanitärarmatur von unten an. Die Signaldioden können in einer Reihe angeordnet sein, welchen jeweils eine bestimmte Brauchwassertemperatur zugeordnet ist. Die Aufnahme ist von erheblicher Grösse um die Batterie sowie die Abdeckung mit den Leuchtdioden aufnehmen zu können.

Das Dokument JP 2001 123 485 A offenbart eine Sanitärarmatur, die dem Oberbegriff des Anspruchs 1 entspricht. Aus WO 2006/094 684 A ist eine Sanitärarmatur mit einem aus transparentem Material bestehenden, beleuchteten Auslauf, offenbart.

Es ist eine Aufgabe der vorliegenden Erfindung, eine gattungsgemäss Sanitärarmatur zu schaffen, deren Betätigungshebel auch bei kleiner Dimensionierung beleuchtet sein kann.

Diese Aufgabe wird mit einer Sanitärarmatur gemäss Patentanspruch 1 gelöst. Der Ort der Lichtquelle und der Ort, wo das mit dieser erzeugte Licht an die Umgebung austritt, sind von einander getrennt. Das Licht wird mittels eines Lichtleitelements von der Lichtquelle zum Lichtaustritt geleitet. Dies ermöglicht auch eine sehr schlanke Ausbildung des Betätigungshebels.

Bevorzugte Ausführungsformen der erfindungsgemässen Sanitärarmatur sind in den abhängigen Patentansprüchen angegeben.

Die Erfindung wird anhand eines in der Zeichnung dargestellten Ausführungsbeispiels erläutert. Es zeigen rein schematisch:
- Fig. 1: in perspektivischer Ansicht und teilweise geschnitten, eine erfindungsgemässe Sanitärarmatur;
- Fig. 2: in einem Längsschnitt, die Sanitärarmatur gemäss Fig. 1, wobei auch hier eine Steuerpatrone nicht geschnitten dargestellt ist;
- Fig. 3: in perspektivischer Darstellung und teilweise geschnitten, ein oberer Endbereich der Sanitärarmatur gemäss den Fig. 1 und 2;
- Fig. 4: im Längsschnitt, gegenüber Fig. 2 vergrössert, den oberen Teil der Sanitärarmatur;
- Fig. 5: in perspektivischer Darstellung, eine Spannzange zum Halten eines Betätigungshebels der in den Fig. 1 bis 4 gezeigten Sanitärarmatur;
- Fig. 6: die Spannzange in Ansicht entsprechend dem Pfeil VI der Fig. 5;
- Fig. 7: in einem Längsschnitt die Spannzange;
- Fig. 8: die Spannzange in Ansicht gemäss dem Pfeil VIII der Fig. 5;
- Fig. 9: in einem Längsschnitt den Betätigungshebel;
- Fig. 10: in Ansicht entsprechend dem Pfeil X in Fig.9 den Betätigungshebel; und
- Fig. 11: in Aufsicht den Betätigungshebel.

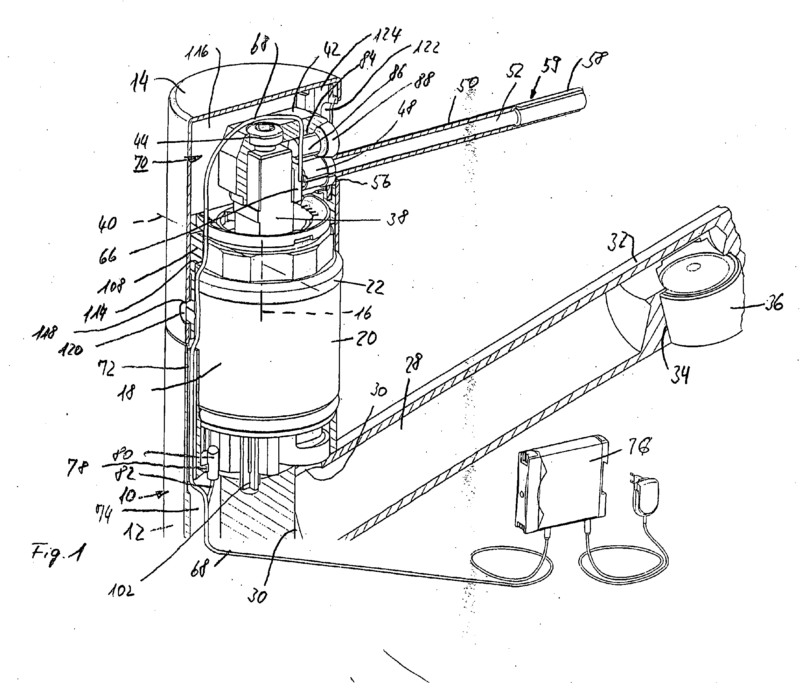

Die in den Figuren 1 bis 4 gezeigte Armatur weist ein Armaturengehäuse 10 mit einer kreiszylinderförmigen Aussenfläche auf, welches aus einem, beispielsweise an einem Waschtisch zu befestigenden Gehäusekörper 12 und einer Abdeckhaube 14 besteht. Diese ist am Gehäusekörper 14 um eine Längsachse 16 des Armaturengehäuses 10 drehbar gelagert.

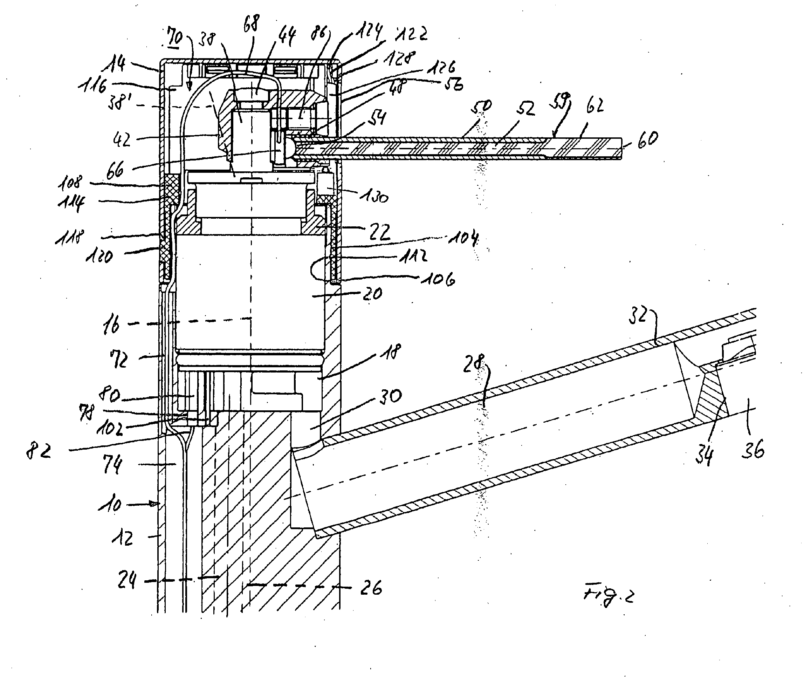

Der Gehäusekörper 12 weist auf seiner der Abdeckhaube 14 zugewandten Oberseite eine Aufnahmeausnehmung 18 auf, in welche in bekannter Art und Weise eine Steuerpatrone 20 eingesetzt und mittels einer ringförmigen Schraube 22 befestigt ist. Durch den Gehäusekörper 12 verlaufen in bekannter Art und Weise zur Aufnahmeausnehmung 18 und zu den betreffenden Einlassöffnungen der Steuerpatrone 20 ein Kaltwassereinlass 24 und ein Warmwassereinlass 26; siehe Fig. 2. Weiter führt von der Aufnahmeausnehmung 18 ein Wasserauslass 28 weg, welcher aus einer vom Boden der Aufnahmeausnehmung 18 nach unten weglaufenden, sacklochartigen Auslassbohrung 30 und einem damit strömungsverbundenen Auslassrohr 32 besteht, welches im Gehäusekörper 12 befestigt ist und von diesem in radialer Richtung und schräg nach oben absteht. Das Auslassrohr 32 weist in seinem freien Endbereich eine Auslassöffnung 34 mit einem darin eingesetzten Mundstück, beispielsweise einen Stahlregler, auf. Der Wasserauslass 28 ist in bekannter Art und Weise mit einer Mischwasseraustrittsöffnung der Steuerpatrone 20 verbunden.

In Richtung gegen oben steht über das Gehäuse der Steuerpatrone 20 ein Betätigungsschaft 38 mit, im vorliegenden Beispiel quadratischem Querschnitt vor. Der Betätigungsschaft 38 ist einerseits um die Längsachse 16 und andererseits um eine diese kreuzende und rechtwinklig dazu verlaufende Querachse 40 verschwenkbar; siehe Fig. 1. In bekannter Weise kann durch Verschwenken um die Längsachse 16 die Temperatur des Brauchwassers und durch Verschwenken um die Querachse 40 der Wasserdurchfluss eingestellt werden. Erstreckt sich, bei der gezeigten Steuerpatrone 20, der Betätigungsschaft 38 in Richtung der Längsachse 16, ist der Wasserdurchfluss unterbrochen; dies ist in den Fig. 1 bis 4 gezeigt. Ein Verschwenken des Betätigungsschafts 38, ausgehend von dieser einen Endlage, um die Querachse 40 bis zur andern, in Fig. 2 mit der Linie 38 angedeuteten Endlage, wird der Wasserdurchfluss kontinuierlich bis zu einem Maximum erhöht. Auch um die Längsachse 16 ist der Betätigungsschaft 38 in einem begrenzten Winkelbereich verschwenkbar. Ist er zum einen Ende dieses Winkelbereichs gedreht, fliesst nur Kaltwasser durch die Armatur, am andern Ende des Winkelbereichs nur Warmwasser und durch Zwischenstellungen ist die Temperatur des Brauchwassers einstellbar.

Auf dem Betätigungsschaft 38 ist drehfest ein Betätigungskörper 42 aufgesteckt und mittels einer Schraube 44 daran befestigt. Der Betätigungskörper 42 weist eine kreiszylinderförmige Aufnahmeöffnung 46 auf, welche rechtwinklig zum Betätigungsschaft 38 verläuft. In diese ist eine hülsenförmige Spannzange 48 eingesetzt, welche von einem rohrförmigen Betätigungshebel 50 durchgriffen ist. Im geradlinig ausgebildeten, dünnwandigen Betätigungshebel 50, im vorliegenden Fall aus Chromstahl, befindet sich ein stabartiges Lichtleitelement 52. Dieses endet beim betätigungskörperseitigen Ende des Betätigungshebels 50 und weist dort eine stirnseitige Lichteintrittsfläche 54 auf. Der Betätigungshebel 50 steht vom Betätigungskörper 42 in radialer Richtung gegen Aussen, einen Schlitz 56 in der Abdeckhaube 14 durchgreifend, ab und das Lichtleitelement 52 weist beim freien Ende des Betätigungshebels 50 einen Lichtaustrittsbereich 58 auf. Der beim Austritt 59 aus dem Betätigungshebel 50 angeordnete Lichtaustrittsbereich 58 besteht einerseits aus der diesseitigen Stirnfläche des Lichtleitelements 52, welche mit dem Ende des schlanken, rohrförmigen Betätigungshebels 50 fluchtet, und andererseits aus einem oben liegenden, bandförmigen Austrittsflächenbereich 62 in einer vom freien Ende her verlaufenden, schlitzförmigen Öffnung 64 des Betätigungshebels 50. Die schlitzförmige Öffnung 64 ist von einem wulstartigen Vorsprung des Lichtleitelements 52 durchgriffen, derart dass der Lichtaustrittsbereich 58 mit der aussenliegenden Oberfläche des Betätigungshebels 59 fluchtet.

In einer nach unten offenen Ausnehmung des Gehäusekörpers 12 ist eine Lichtquelle 66, vorzugsweise bestehend aus einer einzigen LED, aufgenommen. Die Achse der Lichtquelle 66 fluchtet mit dem Lichtleitelement 52 und die Lichtquelle 66 ist dazu bestimmt, ausgesendetes Licht bei der Lichteintrittsfläche 54 in das Lichtleitelement 52 einzukoppeln. Bevorzugt ist die Lichtquelle 66 sehr nahe an der Lichteintrittsfläche 54 angeordnet.

Eine flexible elektrische Speiseleitung 68 verläuft von der Lichtquelle 66 ausgehend durch eine nutförmige Ausnehmung des Gehäusekörpers 12 in Richtung gegen oben, und vom oberen Ende des Gehäusekörpers 12 in einem vom Betätigungskörper 42 und der Abdeckhaube 14 begrenzten, hindernisfreien Raum 70 in einem Bogen zur dem Wasserauslass 28 gegenüberliegenden Rückseite des Armaturengehäuses 10, dort, in einem Spalt zwischen der Abdeckhaube 14 und der Schraube 22 beziehungsweise Steuerpatrone 20, in Richtung gegen unten zu und dann durch eine rohrartige Führung 72 des Gehäusekörpers 12 in eine im Querschnitt grössere, nach unten offene sacklochartige Führungsausnehmung 74 und durch diese hindurch zu einer Speiseeinheit 76 (siehe Fig. 1). Der hindernisfreie Raum 70 ermöglicht der Speiseleitung 68 und dem Betätigungskörper 42 ein konfliktfreies Bewegen beim Schwenken des Betätigungsschafts 38 mittels des Betätigungshebels 50.

Vom Boden der sacklochartigen Führungsausnehmung 74 her verläuft eine Bohrung 78 in die Aufnahmeausnehmung 18. In der Bohrung 78 ist ein Temperatursensor 80 dicht befestigt, welcher einerseits dazu bestimmt ist, die Temperatur des die Steuerpatrone 20 verlassenden und durch den Wasserauslass 28 fliessenden Brauchwassers zu messen und andererseits ein entsprechendes Signal über eine Sensorleitung 82 an die Speiseeinheit 76 abzugeben.

Im gezeigten Ausführungsbeispiel ist die Speiseeinheit 76 über einen Transformator vom elektrischen Netz mit beispielsweise 220 Volt angespiesen und weist eine Steuereinheit auf. Diese steuert, über die Speiseleitung 68, die Lichtquelle 66 mit in Abhängigkeit von der mittels des Temperatursensors 80 gemessenen Brauchwassertemperatur unterschiedlichen Signalen derart an, dass die Lichtquelle 66, in Abhängigkeit von der Temperatur des Brauchwassers, Licht in unterschiedlichen Farben erzeugt. Beispielsweise für kaltes Wasser blau, für Mischwasser Violetttöne und für Warmwasser rot.

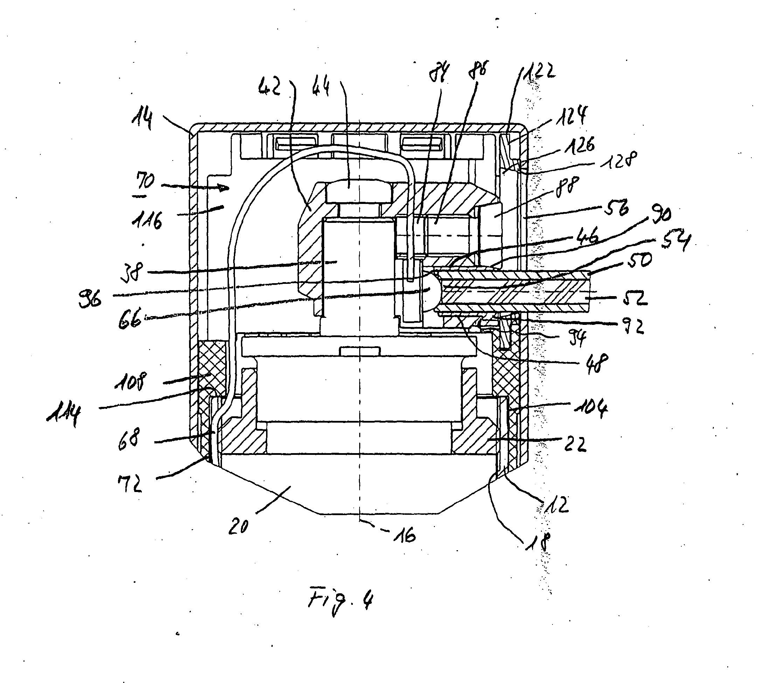

Die Befestigung des Betätigungshebels 50 am Betätigungskörper 42 kann unter Zuhilfenahme der Figuren 4 bis 11 am besten erläutert werden. Der Betätigungskörper 42 weist, in Richtung der Längsachse 16, oberhalb der Aufnahmeausnehmung 46 ein Gewindeloch 84 auf, dessen Achse parallel zur Achse der Aufnahmeausnehmung 46 und somit parallel zum Betätigungshebel 50 verläuft. In das Gewindeloch 84 ist eine Befestigungsschraube 86 mit einem konischen Kopf 88 eingewindet. Dieser verjüngt sich konisch in Richtung zum Schraubenschaft hin.

Der konische Kopf 88 der Befestigungsschraube 86 ist dazu bestimmt, in eine gegengleich geformte Eingriffsausnehmung 90 in einem radial aussen umlaufenden Wulst der Spannzange 48 einzugreifen. Durch das Zusammenwirken des Kopfs 88 der Befestigungsschraube 86 mit der Eingriffsausnehmung 90 wird einerseits die Drehlage der Spannzange 48 festgelegt und andererseits diese in axialer Richtung gehalten in dem der Wulst 92 gegen einen Anschlag 94 des Betätigungskörpers 42 gedrückt wird. Als dritte Funktion wird mittels des Kopfs 88 der Befestigungsschraube 86 die in Längsrichtung geschlitzte Spannzange 48 in radialer Richtung verengt, was zu einer sicheren Befestigung des Betätigungshebels 50 in der Spannzange 48 führt.

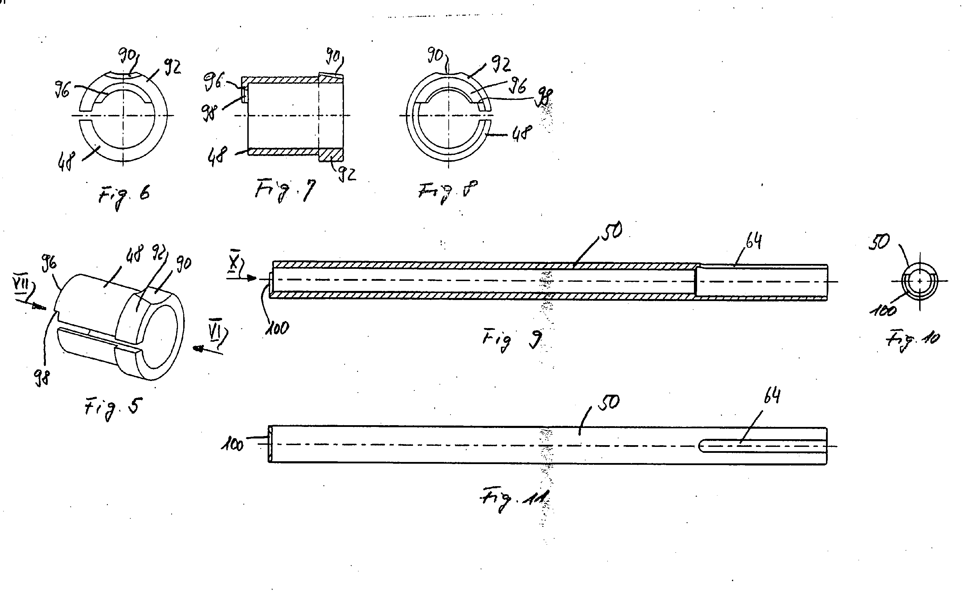

Überdies weist die Spannzange 48 an ihrem dem Wulst 92 abgewandten und der Lichtquelle 66 zugewandten Ende einen Anschlagbereich 96 auf, der sich im oben liegenden Bereich der Spannzange 48 in Umfangsrichtung über einen Teil der hülsenartigen Spannzange 48 erstreckt, sowie in radialer Richtung gegen innen bogenartig vorsteht. Einerseits bildet der Anschlagbereich 96 einen axialen Anschlag für den Betätigungshebel 50 und legt somit die Lichteintrittsfläche 54 des im Betätigungshebel 50 fest angeordneten Lichtleitelements 52 fest, und andererseits bildet er einen Anschlag für die Drehsicherung 98 des Betätigungshebels 50. Der Betätigungshebel 50 weist, wie dies insbesondere den Fig. 9 bis 11 entnehmbar ist, diesseitig einen Drehsicherungsvorsprung 100 auf, dessen Enden, in Umfangsrichtung gesehen, mit den betreffenden Enden des Anschlagbereichs 96 der Spannzange 48 zusammenwirken. Durch diese Drehsicherung 98 einerseits und das Zusammenwirken der Befestigungsschraube 86 mit der Spannzange 48 andererseits ist die eindeutige Drehlage des Betätigungshebels 50 gegeben, so dass die Schlitzförmige Öffnung 64 obenliegend ist.

Der Betätigungshebel 50 durchgreift den Schlitz 56 der Abdeckhaube 14, wobei dieser Schlitz 56 parallel zur Längsachse 16 verläuft und sowohl unten, wie oben durch die Abdeckhaube 14 begrenzt ist. Da die Aufnahmeausnehmung 46 und das Gewindeloch 84 zu einander achsparallel und in Längsrichtung des Schlitzes 56 nebeneinander angeordnet sind, ist eine äusserst einfache Montage gewährleistet. Nachdem die Steuerpatrone 20 drehlagerichtig - dies ist durch von der Steuerpatrone 20 abstehende, in entsprechende Positionslöcher des Gehäusekörpers 12 eingreifende Zapfen 102 sichergestellt - eingesetzt und mittels der Schraube 22 befestigt ist, wird der mit der Lichtquelle 66 ausgestattete Betätigungskörper 42 auf den Betätigungsschaft 38 aufgesteckt und mittels der Schraube 44 befestigt. Die Speiseleitung 68 wird durch die Führung 72 und die Führungsausnehmung 74 hindurchgeführt und an die Speiseeinheit 76 angeschlossen.

In den Betätigungskörper 42 ist bereits die Spannzange 48 in richtiger Drehlage eingesetzt und mittels der leicht eingedrehten Befestigungsschraube 86 in ihrer Lage gehalten. Anschliessend wird die Abdeckhaube 14 über einen oberen Endbereich des Gehäusekörpers 12 gestülpt, derart, dass der Schlitz 56 bei der Aufnahmeausnehmung 18 und der Befestigungsschraube 86 zu liegen kommt. Nun kann der Betätigungshebel 50 in der korrekten Drehlage durch den Schlitz 56 hindurch in die Spannzange 48 eingesteckt und bis zum Anschlagbereich 96 vorgeschoben werden. Anschliessend wird mittels eines Schraubendrehers durch den Schlitz 56 hindurch die Befestigungsschraube 86 festgezogen.

Die Demontage ist auf einfache Weise in entgegengesetzter Reihenfolge möglich.

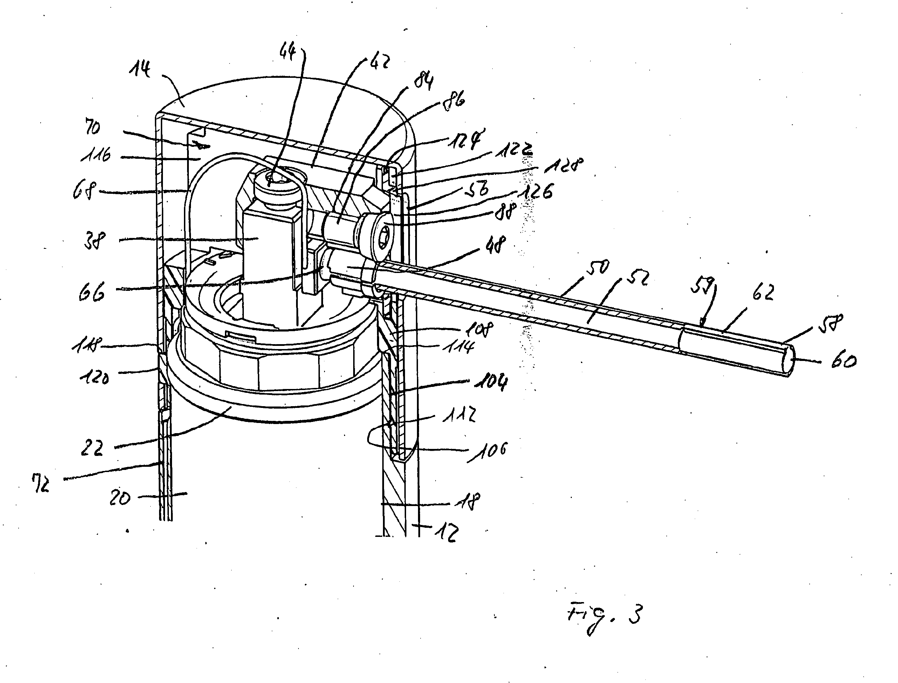

Der Gehäusekörper 12 weist in seinem oberen Endbereich 104 einen reduzierten Aussendurchmesser, sowie eine in Umfangsrichtung verlaufende Nut 106 auf; siehe Fig. 3. In die Abdeckhaube 14, beispielsweise aus Chromstahl, ist eine Kunststoffkappe eingesetzt. Die hülsenförmige Kunststoffkappe 108 liegt Umfangsseitig am oberen Endbereich 104 des Gehäusekörpers 12 an und greift mit einem in Umfangsrichtung verlaufenden Haltewulst 112 in die Nut 106 ein. Die Haltewulst-Nut Verbindung 112,106 sichert einerseits die Abdeckhaube 14 in axialer Richtung und bildet andererseits eine Drehbegrenzung für die Abdeckhaube 14 in Umfangsrichtung, in dem die Nut 106 in Umfangsrichtung begrenzt und der Haltewulst 112 in Umfangsrichtung entsprechend kürzer ausgebildet ist. Überdies weist die Kunststoffkappe 108 eine radial nach innen vorstehende Anschlagschulter 114 auf, mit welcher sie sich am oberen Ende des Gehäusekörpers 12 abstützt und dadurch eine Beschädigung verhindert, im Falle mit sehr grosser Kraft auf die Abdeckhaube 14 eingewirkt wird. Weiter weist die Kunststoffkappe 108 zwei dem Betätigungskörper 42 mit Spiel zwischen sich aufnehmende Wandteile 116 auf.

Die Abdeckhaube 14 ist becherartig ausgebildet und überdeckt die Kunststoffkappe 108 vollständig derart, dass zwischen dem unten liegenden Ende der Abdeckhaube 14 und der den oberen Endbereich 104 begrenzenden Gehäuseschulter nur ein schmaler umlaufender Spalt verbleibt. Da die beiden Wandteile 116 voneinander beabstandet sind, braucht nur die Abdeckhaube 14 mit dem Schlitz 56 versehen zu sein. Auf der dem Schlitz 56 diametral gegenüberliegenden Seite weist die Abdeckhaube 14 eine in radialer Richtung durchgehende kreisrunde Halteöffnung 118 auf, in welche ein Haltezapfen 120 der Kunststoffkappe 108 eingreift. Die Kunststoffkappe 108 wird, vor der Montage der Abdeckhaube 14 am Gehäusekörper 12, vormontiert, indem sie in die Abdeckhaube 14 unter elastischem Zurückdrängen des Haltezapfens 112 eingeführt wird, bis der Haltezapfen 112 in die Halteöffnung 118 hineinspringt.

Beim Schlitz 56 ist auf der Innenseite der Abdeckhaube 14 ein gummielastisches Dichtungselement 122 vorgesehen. Dieses weist einen plattenartigen, rechteckigen Basisteil 124 mit einem dem Schlitz 56 der Abdeckhaube 14 entsprechenden Längsschlitz 126 auf. Vom Basisteil 124 steht eine um den Längsschlitz 126 herum verlaufende, in sich geschlossene Dichtlippe 128 ab, welche an der Abdeckhaube 14 ansteht und den Schlitz 56 der Abdeckhaube 14 ausserhalb des Bereichs des Betätigungshebels 50 annährend verschliesst. Dies bildet einen Schutz gegen Eindringen von Fremdpartikel in das Innere des Armaturengehäuses 10. Das Basisteil 124 ist seitlich in entsprechenden Ausnehmungen der Wandteile 116 der Kunststoffkappe 108 gehalten.

In der Figur 2 ist ein Mikroschalter 130 gezeigt, welcher an der Kunststoffkappe 108 unterhalb des Schlitzes 56 befestigt ist und mit welchem der Betätigungskörper 42 zusammenwirkt. Vom Mikroschalter 130 verläuft in den Raum 70 und von dort parallel zur Speiseleitung 68 eine Signalleitung zur Speiseeinheit 76. Mittels des Mikroschalters 130 ist erkennbar, wann sich der Betätigungshebel 50 in seiner unteren Endlage befindet und somit der Wasserdurchfluss durch die Sanitärarmatur unterbunden ist. Das Signal des Mikroschalters 130 kann unterschiendlichen Zwecken dienen. So ist es möglich, dass die Steuereinheit 76, bei geschlossener Steuerpatrone 20, die Lichtquelle 66 nicht ansteuert, so dass der Betätigungshebel 50 nicht beleuchtet ist. Es ist auch denkbar, bei geschlossener Steuerpatrone 20, die Speiseeinheit 6 in einem energiesparenden Stand-by Betrieb zu halten. Es ist auch möglich, bei geschlossener Steuerpatrone 20, die Lichtquelle 66 auf unterschiedliche Art anzusteuern, dass sie beispielsweise blinkt oder in einer unterschiedlichen Farbe Licht abgibt.

Anstelle des Mikroschalters 130 kann auch ein andersartiger Sensor vorhanden sein. Dieser, beziehungsweise der Mikroschalter, könnten auch mit dem Betätigungshebel 50 selber, der Spannzange 48 oder dem Betätigungsschaft 38 zusammenwirken. Es ist auch denkbar, auf den Mirkoschalter 130 oder einen entsprechenden Sensor zu verzichten, im Falle eine dauernden Beleuchtung des Betätigungshebels 50 erwünscht ist.

Es kann auch auf den Temperatursensor 80 verzichtet werden, im Falle eine von der Temperatur des Brauchwassers unabhängige Beleuchtung erwünscht ist.

Selbstverständlich ist es auch denkbar, Steuerpatronen 20 zu verwenden, deren Betätigungsschaft 38 nur um die Längsachse 16 oder die Querachse 40 schwenkbar ist.

Beim gezeigten Ausführungsbeispiel ist der Betätigungshebel 50 geradlinig und sehr schlank ausgebildet. Selbstverständlich ist es möglich, den Betätigungshebel 50 auch massiver und gegebenenfalls gebogen auszubilden. Überdies bestehen unterschiedliche Möglichkeiten für die Ausbildung des Lichtaustrittsbereichs 58.

## Patentansprüche

1. Sanitärarmatur mit einer in einem Armaturengehäuse (10) angeordneten, mit einem Wassereinlass (24;26) und einem Wasserauslass (28) verbundenen Steuerpatrone (20), einem Betätigungshebel (50) zum Betätigen der Steuerpatrone (20) und wenigstens einer Lichtquelle (66), wobei im Betätigungshebel (50) ein Lichtleitelement (52) angeordnet ist, **dadurch gekennzeichnet, dass** das Lichtleitelement (52) bei einem Austritt (59) aus dem Betätigungshebel (50) einen Lichtaustrittbereich (58) und am anderen Ende eine Lichteintrittsfläche (54) aufweist, und die im Innern des Armaturengehäuses (10) angeordnete Lichtquelle (66) dazu bestimmt ist, bei der Lichteintrittsfläche (54) Licht in das Lichtleitelement (52) einzuspeisen.

2. Sanitärarmatur nach Anspruch 1, **dadurch gekennzeichnet, dass** der Betätigungshebel (50) rohrartig ausgebildet ist und der Lichtaustrittsbereich (58) in einem freien Endbereich des Betätigungshebels (59) angeordnet ist.

3. Sanitärarmatur nach Anspruch 1 oder 2, **dadurch gekennzeichnet, dass** die Steuerpatrone (20) einen wenigstens um eine Achse (16;40) schwenkbaren Betätigungsschaft (38) aufweist, am Betätigungsschaft (38) ein Betätigungskörper (42) befestigt ist, von dem der Betätigungshebel (50) absteht und welcher die Lichtquelle (66) trägt.

4. Sanitärarmatur nach Anspruch 3, **dadurch gekennzeichnet, dass** der Betätigungskörper (42) eine Aufnahmeöffnung (46) für den Betätigungshebel (50) und wenigstens annähernd parallel dazu ein Gewindeloch (84) für eine Befestigungsschraube (86) für den Betätigungshebel (50) aufweist.

5. Sanitärarmatur nach Anspruch 4, **dadurch gekennzeichnet, dass** in der Aufnahmeöffnung (46) eine, wenigstens teilweise vom Betätigungshebel (50) durchgriffene Spannzange (48) angeordnet ist, mit welcher ein, vorzugsweise konisch ausgebildeter Kopf (88) der Befestigungsschraube (86) zusammenwirkt.

6. Sanitärarmatur nach Anspruch 5, **dadurch gekennzeichnet, dass** die Spannzange (48) eine mit der Spannschraube (86) zusammenwirkende Ausnehmung (90) aufweist, um die Spannzange (48) in einer definierten Drehlage zu halten, und dass zwischen der Spannzange (48) und dem Betätigungshebel (50) eine Drehsicherung (98) wirkt, um nur eine gegenseitige Drehlage zuzulassen.

7. Sanitärarmatur nach einem der Ansprüche 4 bis 6, **dadurch gekennzeichnet, dass** der Betätigungshebel (50) einen Schlitz (56) einer Abdeckhaube (14) durchgreift und der Betätigungshebel (50) sowie die Befestigungsschraube (86) in Längsrichtung des Schlitzes (56) nebeneinander angeordnet sind, derart, dass die Befestigungsschraube (86) durch den Schlitz (56) hindurch betätigbar ist.

8. Sanitärarmatur nach einem der Ansprüche 1 bis 7, **dadurch gekennzeichnet, dass** mit dem Betätigungshebel (50) oder gegebenenfalls dem Betätigungskörper (42) oder Betätigungsschaft (38) ein Sensor (80) oder Schalter (130) zusammenwirkt.

9. Sanitärarmatur nach einem der Ansprüche 1 bis 8, **dadurch gekennzeichnet, dass** die Steuerpatrone (20) als eine mit einem Kaltwasser- und einem Warmwassereinlass (24;26) sowie dem Wasserauslass (28) verbundene Mischpatrone ausgebildet ist, ein Temperatursensor (80) für das Brauchwasser mit einer Speiseeinheit (76) verbunden ist und diese die Lichtquelle (66) derart aussteuert, dass die Lichtquelle (66) in Abhängigkeit von der gemessenen Temperatur Licht unterschiedlicher Farbe erzeugt.

10. Sanitärarmatur nach Anspruch 9, **dadurch gekennzeichnet, dass** der Betätigungsschaft (38) um eine Längsachse (16) der Steuerpatrone (20) und eine rechtwinklig dazu verlaufende Querachse (40) schwenkbar ist.

11. Sanitärarmatur nach den einem der Ansprüche 1 bis 10, **dadurch gekennzeichnet, dass** eine flexible Speiseleitung (68) für die Lichtquelle (66) in einer Führung (72;74) des Armaturengehäuses (10), und in einem Bereich zwischen der Führung (72;74) und der Lichtquelle (66) in einem hindernisfreien Raum (70) verläuft.

## Claims

1. Sanitary fitting comprising a control cartridge (20) that is arranged in a fitting housing (10) and is connected to a water inlet (24; 26) and a water outlet (28), an actuating lever (50) for actuating the control cartridge (20), and at least one light source (66), a light guiding element (52) being arranged in the actuating lever (50), **characterized in that** the light guiding element (52) has a light exit region (58) at an exit (59) from the actuating lever (50) and a light entrance surface (54) at the other end, and the light source (66) arranged in the interior of the fitting housing (10) is intended for feeding light into the light guiding element (52) at the light entrance surface (54).

2. Sanitary fitting according to Claim 1, **characterized in that** the actuating lever (50) is of tube-type design and the light exit region (58) is arranged in a free end region of the actuating lever (59).

3. Sanitary fitting according to Claim 1 or 2, **characterized in that** the control cartridge (20) has an actuating shaft (38) that can pivot at least about an axis (16; 40), and there is fastened on the actuating shaft (38) an actuating body (42) from which the actuating lever (50) projects, and which carries the light source (66).

4. Sanitary fitting according to Claim 3, **characterized in that** the actuating body (42) has a receiving opening (46) for the actuating lever (50) and, at least approximately parallel thereto, a threaded hole (84) for a fastening screw (86) for the actuating lever (50).

5. Sanitary fitting according to Claim 4, **characterized in that** arranged in the receiving opening (46) is a collet chuck (48) that is at least partially penetrated by the actuating lever (50) and with which a preferably conically designed head (88) of the fastening screw (86) cooperates.

6. Sanitary fitting according to Claim 5, **characterized in that** the collet chuck (48) has a cutout (90) cooperating with the clamping screw (86) in order to hold the collet chuck (48) in a defined rotary position, and **characterized in that** a rotational lock (98) acts between the collet chuck (48) and the actuating lever (50) in order to permit only a reciprocal rotary position.

7. Sanitary fitting according to one of Claims 4 to 6, **characterized in that** the actuating lever (50) penetrates a slot (56) of a covering hood (14), and the actuating lever (50) and the fastening screw (86) are arranged next to one another in the longitudinal direction of the slot (56) in such a way that the fastening screw (86) can be actuated through the slot (56).

8. Sanitary fitting according to one of Claims 1 to 7, **characterized in that** a sensor (80) or switch (130) cooperates with the actuating lever (50) or, if appropriate, with the actuating body (42) or actuating shaft (38).

9. Sanitary fitting according to one of Claims 1 to 8, **characterized in that** the control cartridge (20) is designed as a mixer cartridge connected to a cold water and a warm water inlet (24; 26) and to the water outlet (28), a temperature sensor (80) for the service water is connected to a feed unit (76), and the latter drives the light source (66) in such a way that the light source (66) generates light of a different color as a function of the measured temperature.

10. Sanitary fitting according to Claim 9, **characterized in that** the actuating shaft (38) can be pivoted about a longitudinal axis (16) of the control cartridge (20) and a transverse axis (40) running perpendicular thereto.

11. Sanitary fitting according to one of Claims 1 to 10, **characterized in that** a flexible feed line (68) for the light source (66) runs in a guide (72; 74) of the fitting housing (10), and in an unobstructed space (70) in a region between the guide (72; 74) and the light source (66).

## Revendications

1. Robinetterie sanitaire comprenant une cartouche de commande (20) disposée dans un boîtier de robinetterie (10) et connectée à une entrée d'eau (24 ; 26) et une sortie d'eau (28), un levier d'actionnement (50) pour l'actionnement de la cartouche de commande (20) et au moins une source de lumière (66), un élément de guide de lumière (52) étant disposé dans le levier d'actionnement (50), **caractérisée en ce que** l'élément de guide de lumière (52) présente au niveau d'une sortie (59) hors du levier d'actionnement (50), une région de sortie de lumière (58), et à l'autre extrémité une surface d'entrée de lumière (54), et la source de lumière (66) disposée à l'intérieur du boîtier de robinetterie (10) est prévue pour injecter de la lumière dans l'élément de guide de lumière (52) au niveau de la surface d'entrée de lumière (54).

2. Robinetterie sanitaire selon la revendication 1, **caractérisée en ce que** le levier d'actionnement (50) est réalisé sous forme tubulaire et la région de sortie de lumière (58) est disposée dans une région d'extrémité libre du levier d'actionnement (59).

3. Robinetterie sanitaire selon la revendication 1 ou 2, **caractérisée en ce que** la cartouche de commande (20) présente une tige d'actionnement (38) pouvant pivoter au moins autour d'un axe (16 ; 40), **en ce qu'**un corps d'actionnement (42) est fixé sur la tige d'actionnement (38), depuis lequel le levier d'actionnement (50) fait saillie et qui porte la source de lumière (66).

4. Robinetterie sanitaire selon la revendication 3, **caractérisée en ce que** le corps d'actionnement (42) présente une ouverture de réception (46) pour le levier d'actionnement (50) et au moins approximativement parallèlement à celui-ci, un trou fileté (84) pour une vis de fixation (86) pour le levier d'actionnement (50).

5. Robinetterie sanitaire selon la revendication 4, **caractérisée en ce que** dans l'ouverture de réception (46) est disposée une pince de serrage (48) au moins en partie traversée avec engagement par le levier d'actionnement (50), avec laquelle coopère une tête (88) de la vis de fixation (86), de préférence de forme conique.

6. Robinetterie sanitaire selon la revendication 5, **caractérisée en ce que** la pince de serrage (48) présente un évidement (90) coopérant avec la vis de serrage (86), afin de maintenir la pince de serrage (48) dans une position de rotation définie, et **en ce qu'**entre la pince de serrage (48) et le levier d'actionnement (50) agit une fixation en rotation (98), pour n'autoriser qu'une position rotative mutuelle.

7. Robinetterie sanitaire selon l'une quelconque des revendications 4 à 6, **caractérisée en ce que** le levier d'actionnement (50) s'engage à travers une fente (56) d'un capot de recouvrement (14) et le levier d'actionnement (50) ainsi que la vis de fixation (86) sont disposés dans la direction longitudinale de la fente (56) l'un à côté de l'autre, de telle sorte que la vis de fixation (86) puisse être actionnée à travers la fente (56).

8. Robinetterie sanitaire selon l'une quelconque des revendications 1 à 7, **caractérisée en ce qu'**un capteur (80) ou un commutateur (130) coopère avec le levier d'actionnement (50) ou éventuellement le corps d'actionnement (42) ou la tige d'actionnement (38).

9. Robinetterie sanitaire selon l'une quelconque des revendications 1 à 8, **caractérisée en ce que** la cartouche de commande (20) est réalisée sous forme de cartouche de mélange connectée à une entrée d'eau froide et une entrée d'eau chaude (24 ; 26) ainsi que la sortie d'eau (28), un capteur de température (80) pour l'eau de consommation étant connecté à une unité d'alimentation (76) qui commande la source de lumière (66) de telle sorte que la source de lumière (66) produise de la lumière de différente couleur en fonction de la température mesurée.

10. Robinetterie sanitaire selon la revendication 9, **caractérisée en ce que** la tige d'actionnement (38) peut pivoter autour d'un axe longitudinal (16) de la cartouche de commande (20) et d'un axe transversal (40) s'étendant perpendiculairement à celui-ci.

11. Robinetterie sanitaire selon l'une quelconque des revendications 1 à 10, **caractérisée en ce qu'**une conduite d'alimentation flexible (68) pour la source de lumière (66) s'étend dans un guide (72 ; 74) du boîtier de robinetterie (10), et dans une région entre le guide (72 ; 74) et la source de lumière (66) dans un espace (70) exempt d'obstacles.
